# EUROPEAN PATENT SPECIFICATION

(11) **EP 3 361 225 B1**
(45) Date of publication and mention of the grant of the patent: **02.08.2023**
(21) Application number: 17155389.4
(22) Date of filing: 09.02.2017
(51) Int. Cl.: G01H 9/00, G01V 1/22

(54) **MODULE, SYSTEM AND METHOD OF DISTRIBUTED VIBRATION SENSING**
MODUL, SYSTEM UND VERFAHREN ZUR VERTEILTEN VIBRATIONSERFASSUNG
MODULE, SYSTÈME ET PROCÉDÉ DE DÉTECTION DE VIBRATION RÉPARTIE

(43) Date of publication of application: 15.08.2018
(73) Proprietor: Aragon Photonics Labs, S.L.U., 50009 Zaragoza (ES); Fibercom S.L., 50009 Zaragoza (ES)
(72) Inventor: SEVILLANO REYES, Pascual, 50009 ZARAGOZA (ES); HERAS VILA, Carlos, David, 50009 ZARAGOZA (ES); SUBÍAS DOMINGO, Jesús, Mario, 50009 ZARAGOZA (ES); MARTÍNEZ MURO, Juan, José, 50009 ZARAGOZA (ES); LÓPEZ TORRES, Francisco, Manuel, 50009 ZARAGOZA (ES); VILLAFRANCA VELASCO, Asier, 50009 ZARAGOZA (ES)
(74) Representative: Herrero & Asociados, S.L.

(56) References cited:
- WO-A1-2008/081157
- WO-A1-2010/057247
- WO-A1-2012/068558
- WO-A1-2015/110177
- WO-A2-03/032549
- US-A- 6 101 025
- US-A1- 2004 047 629

## Description

### FIELD OF THE INVENTION

The present invention has its application within the distributed sensing sector and, especially, in the industrial area engaged in providing fiber optics distributed vibration sensors.

### BACKGROUND OF THE INVENTION - RELATED ART

Distributed vibration sensors (DVS), also known as distributed acoustic sensors (DAS) are highly sought after in diverse applications such as perimetral security, energy ducts supervision or structural health monitoring. In particular, DVS systems based on fiber optics are capable of detecting vibrations along large distances with a single active device, by means of analyzing the counter-propagating Rayleigh backscatter generated by a train of probe short light pulses. Said light pulses typically present a frequency in the range between hundreds and thousands of Herzs, and pulses durations in the range between tens and hundreds of nanoseconds. As the light pulses propagate forwards through the fiber, small reflections occur due to material interaction, generating backscattered Rayleigh light pulses. The backscattered pulses are longer than the launched light pulses that generate them due to the flight time of the light within the fiber, and have decaying power due to the accumulated attenuation of the optical fiber. If the laser light is highly coherent, the backscattered pulses do not present a smooth monotone decay, contrary to Optical Time Domain Reflectometry (OTDR) systems. Instead, DVS backscattered light presents random fringe patterns that remain stable in the absence of vibrations, but that change locally in the presence of said vibrations.

The light pulses emitted in the forward direction are spread over a certain length of fiber which depends on pulse duration and the fiber refractive indices. For example, a 100 ns pulse will mean that approximately 20 m of fiber are illuminated with the same pulse. Therefore, the backscattered signals at different points of the fiber illuminated by the same forward pulse are coherent and able to interfere, as they have the same phase origin. The interference in static conditions will depend on the phase shift induced by the fiber for each path, which is unknown and can be considered to be random to all effects. However, if a part of the fiber is externally affected by a vibration, the phase shift induced by this external phenomenon will change, varying the fringe pattern associated to that section of the fiber. Therefore, by analyzing the differences between the Rayleigh backscatter of consecutive pulses, the sections where external stimuli are being applied can be identified. Also, by analyzing the frequency characteristics of these variations, information on the possible cause of the vibration stimuli can be extracted.

Fiber-based DVS systems hence circumvent the need of placing complex arrays of local sensors, turning the fiber itself into a long distributed sensor instead. Furthermore, the only active element of the system, that is, the device comprising the pulsed laser and the detector, is placed in one end of the fiber, making it easier to protect from burglary or tampering. However, despite the achievable sensing lengths being significantly long, typically in the range of kilometers, they are still limited by the progressive depletion of the forward train of light pulses. As a consequence, there is a remarkable interest in overcoming this range limitation of DVS beyond a simple concatenation of pulsed lasers, which are complex, sensitive and expensive (and therefore not appropriate for multiple unprotected and uncontrolled stations along the sensed region).

Some DVS systems, such as the one disclosed by WO 2016/144620 A1, have proposed an architecture based on a plurality of parallel detectors located in the device transmitting the train of light pulses. Each detector is in charge of analyzing one of a plurality of consecutive fiber segments. Between each two segment, a circulator routes the backscattered Rayleigh light into an auxiliary fiber connected to the detector array. Nevertheless, this strategy is only meant to increase the forward light pulse repetition frequency, and not the sensing distance. Therefore, this architecture does not provide any solution to the aforementioned range limitation. On the contrary, the need of routing back multiple auxiliary fibers makes it viable only for concrete applications, with lengths up to tens or hundreds of meters.

WO 2015/110177 A1 discloses a module of distributed vibration sensing based on backscattered Rayleigh light generated by light pulses which comprises an optical amplifier to compensate losses. However, this scheme does not compensate any additional degradation in the pulse shape, such as the degradation due to fiber dispersion. Additionally, each module comprises a single input and output, limiting the segment topologies that can be implemented.

WO 212/068558 A1 discloses a module based on coherent Rayleigh backscatter, which routes multiple backscattered pulses back via up-lead optical leads. However, the proposed scheme does not compensate any pulse degradation which occurs in the optical fiber.

Finally, WO 03/032549 A2 discloses an optical transport network architecture with regenerating, reshaping and retiming modules, providing electronic dispersion compensation, although the proposed scheme is meant for optical communications instead of for optical sensing based on Rayleigh backscatter.

US 6 101 025 A discloses an optical repeater having redundancy.

There is hence the need in the state of the art of a DVS technique that enables to overcome sensing length limitations in a robust manner without significantly increasing system complexity through sensitive devices such as pulsed lasers to generate new pulses, nor increasing the fiber layout complexity through long spans of auxiliary fibers or cables for backscattered light rerouting.

### SUMMARY OF THE INVENTION

The present invention relates to a module of distributed vibration sensing based on Backscattered Rayleigh light according to claim 1 and a method of of distributed vibration sensing based on Rayleigh scattered light according to claim 13. Advantageous embodiments of the invention are described in the dependent claims.

The current invention solves the aforementioned problems by disclosing a DVS technique in which the forward train of pulses generated by a master device is regenerated and conditioned at a repeater (or a plurality of repeaters) located between segments of optical fiber. Each repeater also comprises an independent detector which measures the backscattered Rayleigh light of the next fiber segment, being the sensing information obtained transmitted to a central server which overviews the master device and any repeaters, hence enabling to increase measuring distances without additional pulsed lasers or fiber layouts.

In a first aspect of the invention, a module of DVS based on Rayleigh scattered light is disclosed. The module is adapted to be connected to at least two fiber segments:
- A first segment through an input port for receiving forward light pulses, generated by a master device.
- A second segment through an input/output port for transmitting the forward light pulses after regeneration, and receiving the backscattered Rayleigh light generated by said forward light pulses in said second segment.

Furthermore, the module comprises regeneration means which receive the light pulses from the first segment, condition the said light pulses and transmit the light pulses into the second segment. That is, the regeneration means apply signal treatment techniques to the light pulses which improve the optical performance of said pulses for distributed sensing, such as optical power, signal-to-noise ratio (SNR), pulse shape or temporal width; instead of generating a new train of pulses. Light pulse generation is hence limited to a master device at one end of the plurality of fiber segments, preventing its tampering or robbery, and facilitating its control and supervision.

The regeneration means preferably comprise reshaping means, which compensate or mitigate the dispersion and SNR degradation suffered by the light pulses in the first optical segment before arriving at the module. More preferably, the reshaping means further comprise a dispersion compensation optical fiber and/or optical filter. Preferably, the regeneration means also comprise an optical amplifier to compensate depletion suffered by the light pulses along said first optical fiber segment. Also preferably, the module also comprises an optical isolator at the input port adapted to be connected to the first optical fiber segment, in order to prevent any further reflection or parasitic backscatter to be overlapped with the backscattered Rayleigh light of the first segment.

Moreover, the module comprises detection means adapted to receive the backscattered Rayleigh light generated by the forward light pulses in the second optical fiber segment. That is, the modules can be concatenated through optical fiber segments, each module then performing DVS measurements (i.e. retrieving sensing information based on the detected backscattered Rayleigh light) on a single segment. In a preferred option, the detection means are coherent detection means on a master oscillator signal received at the module from the master device originally generating the forward light pulses. The coherent detection means are further configured to amplify and redistribute the master oscillator signal to subsequent regeneration modules. The retrieved sensing information is then transmitted to a remote central server through connection means of the module, which can be implemented through any general technology known in the state of the art (both wired and wireless, though preferably wireless) for communication links or networks. Depending on the particular embodiment of the invention, the sensing information transmitted to the server may be raw data characterizing the Rayleigh backscatter, or processed data in which relevant vibration information has already been extracted, such as vibration vs position curves, frequency information, alarms, etc.

Building upon the described scheme, other preferred input/output combinations are implemented in the module to enable more complex fiber segments topologies, such as branched topologies or redundancy links. The module is also configured to receive light pulses from at least a third optical fiber segment (e.g. a redundancy fiber parallel to the second fiber segment), condition the light pulses, and transmit the light pulses into a fourth optical fiber segment (e.g. a redundancy fiber parallel to the second fiber segment). Regeneration means may hence comprise duplicated elements for light conditioning in both directions.

In a second preferred option, the regeneration means of the module further comprise a splitter which routes the regenerated (conditioned) forward light pulses into at least two input/output ports (output for the forward light pulses, input for the backscattered Rayleigh light), effectively enabling a branched fiber layout. The detection means are hence configured to perform DVS on the at least two optical fiber segments connected to the input/output ports, and send information regarding both segments to the remote server.

In a second aspect of the present invention, a system of DVS sensing based on Rayleigh scatter is presented. The system is configured to perform DVS sensing on a plurality of fiber segments by regenerating and routing the forward train of light pulses, and performing distributed detection between a master device and one or more regeneration modules. That is, the system comprises at least:
- A master device, comprising a pulsed laser configured to generate the forward optical light pulses and transmit said pulses into a first optical fiber segment. The master device also comprises detection means configured to detect the backscattered Rayleigh light in said first optical fiber segment, hence generating sensing information of said first optical fiber segment. Preferably, the sensing information generated at the master device is transmitted to a remote central server. Nevertheless, in particular embodiments, the central server may be implemented within the master device, being the sensing information from the regeneration modules being transmitted to said master device.
- At least one regeneration module, according to any embodiment of the first aspect of the invention. That is, the regeneration module comprises regeneration means configured to receive, condition and transmit again the forward light pulses. In the case of the first regeneration module, the pulses are received from the master device through the first optical fiber segment and transmitted to the second optical fiber segment. If the system comprises additional regeneration modules, the second regeneration module receives the light pulses transmitted by the first regeneration module through the second optical fiber segments, and transmits them through a third optical fiber segment after regeneration; and so on.
- A central server wired or wirelessly connected to the master device and the regeneration modules which receives and unifies the sensing information measured at all the optical fiber segments.

According to preferred embodiments of the system of the invention, the master device and/or may have multiple input/output and/or input ports, enabling various fiber layouts. For example, the master device and the regeneration module (or modules) may either be connected in an open loop or in a closed loop configuration. In both cases, the system comprises redundancy optical fibers. Depending on the topology, the system may terminate in a regeneration module, a second master module or a termination module.

Finally, in a third aspect of the present invention, a DVS method is presented, comprising the following steps:
- Receiving light pulses from a first optical fiber segment and a third optical fiber redundancy segment. The received pulses may be received either directly from a master device, or from a regeneration module that regenerate the pulses transmitted by said master device.
- Conditioning the light pulses, preferably through amplification, reshaping and/or filtering.
- Transmitting the conditioned light pulses into a second optical fiber segment and a fourth optical fiber redundancy segment.
- Sensing the vibrations of the second optical fiber by detecting the received Rayleigh scattered light generated at the second optical fiber segment, hence generating sensing information regarding said second optical fiber segment.
- Sending the sensing information to a remote server which overviews multiple optical fiber segments.

Notice that any particular embodiment or preferred option of the module of the first aspect of the invention may also be applied to particular embodiments of the method or system of the invention. Likewise, any particular embodiment or preferred option of the method or system of the invention may be implemented as part of the elements and/or configuration of the module of the invention.

With the disclosed module, system and method, DVS measurement range is enhanced beyond the limits of conventional systems. Furthermore, regenerating modules are autonomous and do not require the generation of new pulses, distribution of electrical clocks or local oscillators, nor auxiliary for backscattered light re-distribution. These and other advantages will be apparent in light of the detailed description.

### BRIEF DESCRIPTION OF THE DRAWINGS

For the purpose of aiding the understanding of the characteristics of the invention, according to a preferred practical embodiment thereof and in order to complement this description, the following figures are attached as an integral part thereof, having an illustrative and non-limiting character:
Figure 1 schematically depicts a first open-loop architecture according to an example, not forming part of the invention.
Figure 2 shows a second closed-loop architecture according to an example, not forming part of the invention.
Figure 3 present a third architecture with redundancy and a termination implemented with a regeneration module, according to a preferred embodiment of the system of the invention.
Figure 4 shows a fourth architecture with redundancy and a termination implemented with a master module, according to a preferred embodiment of the system of the invention.
Figure 5 illustrates a fifth closed-loop architecture with redundancy according to a preferred embodiment of the system of the invention.
Figure 6 presents a sixth architecture with multiple branches according to an example, not forming part of the invention.
Figure 7 schematically depicts an example, not forming part of the invention of a master module of the system of the invention.
Figure 8 presents a first preferred embodiment of a master module of the system of the invention with redundancy.
Figure 9 illustrates an example, not forming part of the invention of a master module of the system of the invention with coherent detection.
Figure 10 shows a second preferred embodiment of a master module of the system of the invention with coherent detection and redundancy.
Figure 11 exemplifies a third preferred embodiment of a master module of the system of the invention with two ports and redundancy.
Figure 12 schematically depicts an example, not forming part of the invention.
Figure 13 presents a second preferred embodiment of a regeneration module of the system of the invention with redundancy.
Figure 14 illustrates an example, not forming part of the invention with dual outputs for branched schemes.
Figure 15 depicts an example, not forming part of the invention with local oscillator distribution.
Figure 16 shows a first preferred embodiment of a termination module of the system of the invention.

### DETAILED DESCRIPTION OF THE INVENTION

Note that in this text, the term "comprises" and its derivations (such as "comprising", etc.) should not be understood in an excluding sense, that is, these terms should not be interpreted as excluding the possibility that what is described and defined may include further elements, steps, etc.

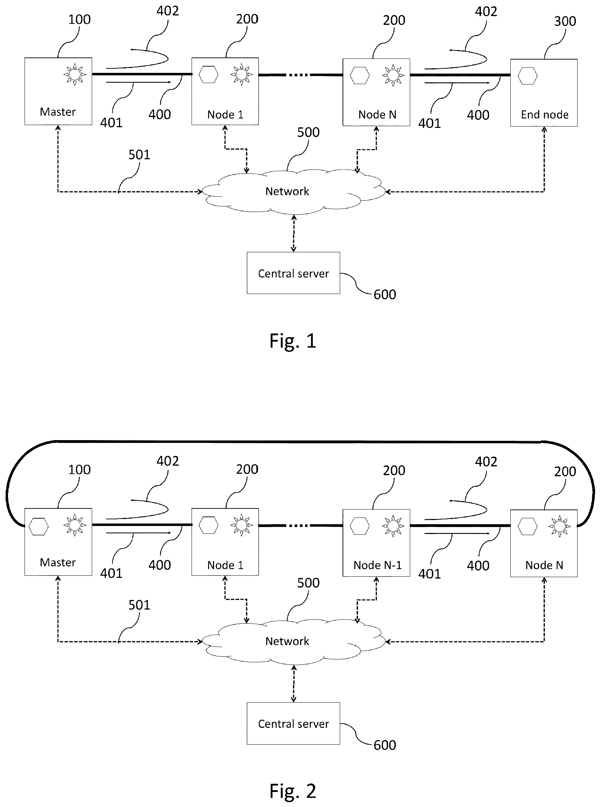

Figure 1 presents a first an example, not forming part of the invention, namely a non-redundant open-loop linear architecture in which a master device (100) is linearly connected to a plurality of regeneration modules (200) through a plurality of optical fiber (400) segments which terminate at a termination module (300). For simplicity, in the figures, master devices (100) are also noted as 'master'; regeneration modules (200) are also noted as 'node 1', `node N-1' and 'node N'; and termination modules are also noted as 'end node'. In this particular architecture (i.e. non-redundant open-loop linear), the master device (100) only comprises one input/output port which transmits the forward light pulses (401) generated at said master device (100) and receives the backscattered Rayleigh light (402) generated by said light pulses (401) in a first optical fiber (400) segment. Each regeneration module comprises one input port that receives the light pulses (401), partially depleted and dispersed after fiber propagation, and one input/output that transmit the light pulses (401) after regeneration and receives the backscattered Rayleigh light (402) generated by said light pulses (401) in the next optical fiber (400) segment. Finally, the termination module (300) only comprises one input port that receives the light pulses (401) after propagating through the last optical fiber (400) segment.

The master device (100), regeneration modules (200) and termination module (300) are also connected through connections (501) to a communication network (500), which in turn is also connected to a central server (600). Notice that connections (501) may be implemented through wired or wireless technologies, following any suitable technology and protocol known in the state of the art, such as for example, a wireless internet protocol connection. Furthermore, in particular embodiments, the central server (600) may be a stand-alone device, or it may be integrated in one of the other elements of the system, typically the master device (100).

Figure 2 presents another example, not forming part of the invention, corresponding to a non-redundant closed-loop architecture. In this case, instead of a termination module (300), the last regeneration module (200) is connected to the master device (100). Therefore, the master device (100) comprises both the aforementioned one input/output port and an additional input port that receives the light pulses (401) after propagating through the last optical fiber (400) segment.

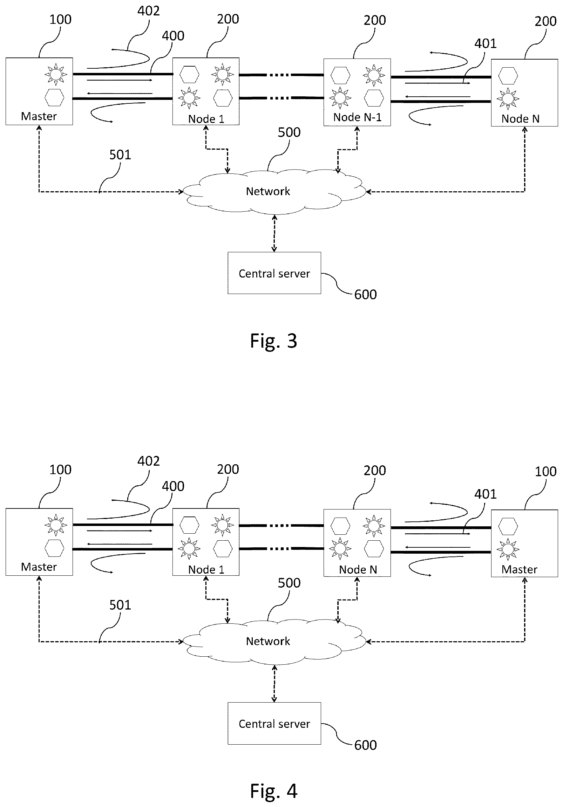

Figure 3 presents a first system embodiment corresponding to a redundant linear open-loop architecture. In this case, the last regeneration module (200), i.e. node N, routes the light pulses (401) back to the previous regeneration module (200), i.e. node N-1, and so on. Each fiber link is hence covered by two optical fibers (400), the second of which provides redundancy information over the same measurement distance. The master device (100) and the last regeneration module (200) comprise one input port that receives the light pulses (401) and one input/output that transmit the light pulses (401) and receives the backscattered Rayleigh light (402); whereas the rest of regeneration modules (200) comprise two input ports and two input/output ports, one for each measurement direction.

Figure 4 presents a second system embodiment, also a redundant linear open-loop architecture. However, in this case, instead of terminating in a regeneration module (200), the last optical fiber (400) segment terminates in a second master device (100) which generates new light pulses (401) for the redundancy optical fibers (400). Both master devices (100) comprise one input port that receives the light pulses (401) and one input/output that transmit the light pulses (401) and receives the backscattered Rayleigh light (402); whereas all the regeneration modules (200) comprise two input ports and two input/output ports, one for each measurement direction.

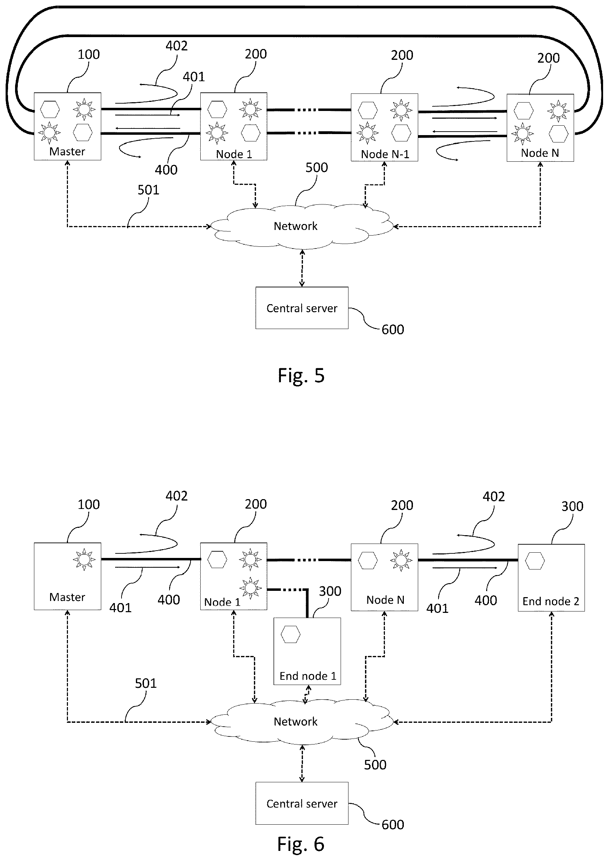

Figure 5 presents a third system embodiment, in a closed-loop redundant architecture. A single master device (100) with two input ports and two input/output ports injects light pulses (401) into two fiber rings, in counter-propagating directions. All the regeneration modules (200) comprise two input ports and two input/output ports, one for each measurement direction, being the first regeneration module (200), i.e. node 1, and the final regeneration module (200), i.e. node N, both connected to the master device (100).

Finally, figure 6 presents another example, not forming part of the invention in a open-loop non-redundant branched architecture. In this architecture one or more of the regeneration modules (200) comprise a single input port but two (or more) input/output ports. That is, after light pulses (401) are regenerated, they are split into two (or more) different optical fiber (400) segments, enabling a branched fiber layout. The regeneration module (200) is therefore also configured to detect the backscattered Rayleigh light (402) of both branched segments independently, and send the information to the central server (600). Note that, depending on particular embodiments, the system may comprise multiple subsequent branches, and that each branch may comprise any number of regeneration modules (200) and an independent termination module (300), or a common termination module (300).

Note that particular embodiments of the system may comprise any combination of the features disclosed within the previous system embodiment. For example, particular embodiments of the system of the invention may combine a branched fiber layout with closed loops and/or redundancy fibers. Moreover, said features may be present in some but not all of the fiber links. For example, a particular embodiment of the system of the invention may comprise redundancy fibers only in part of its links. Finally, particular embodiments may comprise any additional optical, wired or wireless connection for distributing local oscillators or electrical clocks, coordinating device operation, or any other purpose.

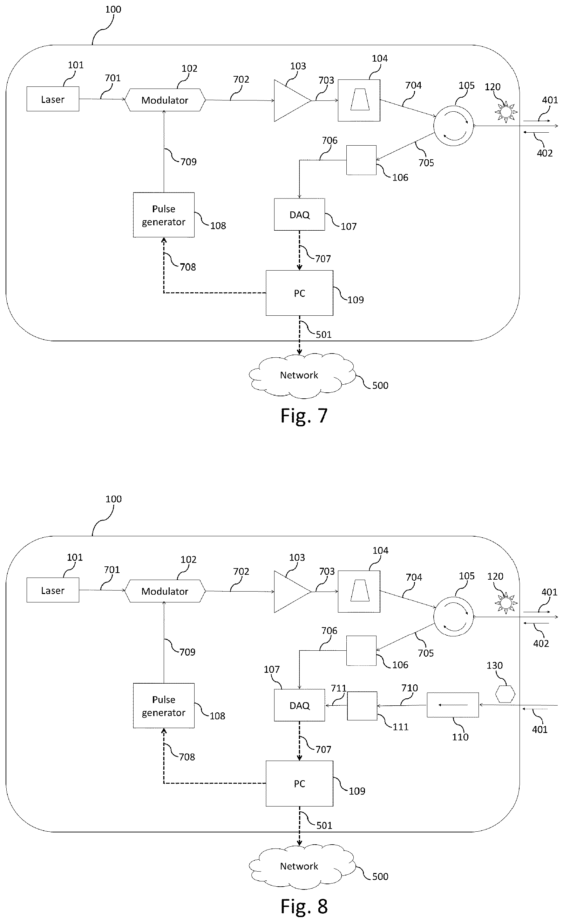

Figure 7 schematically depicts the components of an example, not forming part of the invention of the master device (100) comprising a single input/output port (120). In order to maintain a univocal nomenclature, while preserving text clarity, any mention to a component, signal or port from this moment till otherwise noted refers to the instance of that component, signal or port comprised within the master device (100). That is, for example, any mention to an optical amplifier refers to the master device optical amplifier (103) and not to the regeneration module optical amplifier (204) until otherwise noted.

The master device (100) comprises a laser (101) which emits a continuous wave signal (701) with narrow spectrum and stable emission frequency. This continuous wave signal (701) is modulated at a modulator (102) by an electrical pulse train (709) generated at a pulse generator (108). The modulator (102) is, for example, and acousto-optic modulator. The modulated signal (702) is then amplified at an optical amplifier (103), and the amplified signal (703) is filtered at an optical passband filter (104), reducing the noise introduced by spontaneous emission of the optical amplifier (103). The filtered signal (704), comprising the train of light pulses (401) is then routed through a circulator (105) and the input/output port (120) into the sensing optical fiber (400) segment. Said input/output port (120) also receives the backscattered Rayleigh light (402). The received signal (705) is circulated through the circulator (105) and detected at a first photodetector (106), which produces a first electrical signal (706) proportional to the backscattered Rayleigh light (402). The detected first electrical signal (706) is digitalized at analog to digital converter (DAQ, 107), which is synchronized with the pulse generator (108) through a trigger signal.

The digitalized signal (707) is then processed by processing means (109), also noted as 'PC' in the figure. Note, nevertheless, that the processing means (109) may comprises computer program code means adapted to run on a computer, a digital signal processor, a field-programmable gate array, an application-specific integrated circuit, a micro-processor, a micro-controller, or any other form of programmable hardware. The processed information is then transmitted to the server (600) through a connection (501) of a network (500). Notice that, depending on the particular embodiment, the processed information may be sent continuously, periodically or just in case of particular events, and may comprise full measured traces, already-computed distributed vibration information, or information related to particular events or alarms. Processing means (109) may also generate one or more control signals (708) adapted to control adjustable parameters of other elements of the master device (100), such as the frequency or duration of the pulse generator (108).

Figure 8 presents a first embodiment of the master device (100) of the invention comprising one input/output port (120) and one input port (130) that receives light pulses (401) from a redundancy or closed-loop optical fiber (400) segment. This can be applied, for example, to the second, third and fourth embodiments of the system of the invention (redundant open-loop architecture or non-redundant closed-loop architectures). Beyond the elements already described for the first embodiment of the master device (100), the second embodiment of the master device (100) further comprises an isolator (110) connected to the input port (130) that prevents any back-reflection into the redundancy fiber that may interfere with the vibration measurement. The resulting signal (710) after the isolator (110) is detected at a second photodetector (111) generating a second electrical signal (711) that is also digitalized at the analog to digital converter (DAQ, 107), processed by the processing means (109) and transmitted to the server (600). Notice that information extracted from the light pulses (401) received at the input port (130) is used for diagnostics, such as verifying that light pulses (401) are arriving correctly at the previous module, that there are no unexpected power losses, etc. The measurement and application of diagnostics signals is therefore an optional feature that may vary in different embodiments.

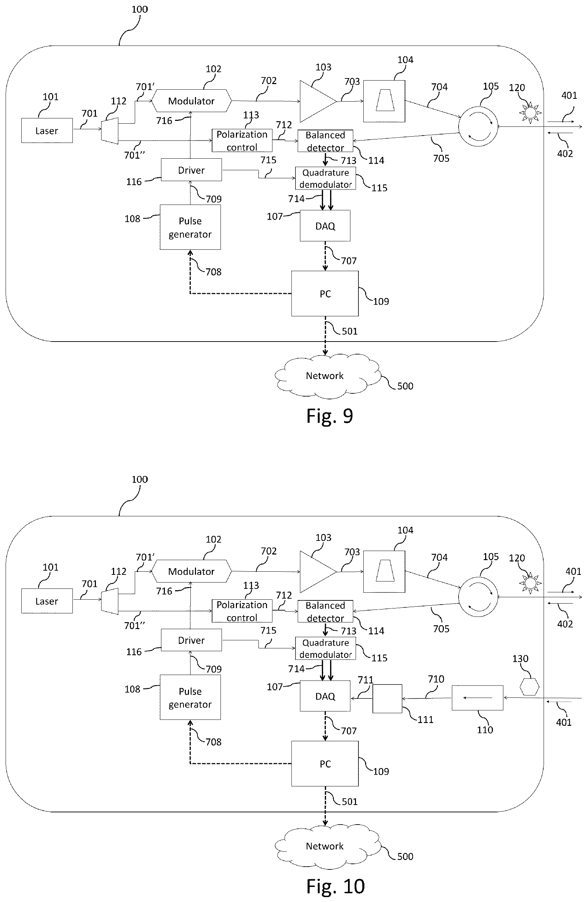

Figure 9 presents another example, not forming part of the invention of the master device (100) comprising one input/output port (120) and coherent detection. In coherent detection, the continuous wave signal (701) is split into two paths by a splitter (112). The first split signal (701') is fed to the modulator (102), whose pulsed electrical carrier (716) is generated at a driver (116) from the electrical pulse train (709) of the pulse generator (108). The driver (116) modulates a high-voltage radio-frequency signal, typically with a frequency in the range of tens to hundreds of MHz, generated by the driver (116) itself with the electrical pulse train (709) generated by the pulse generator (108). The optical carrier of the modulated signal (702) is hence displaced by a certain frequency shift that is equal to the frequency of the radio frequency signal present in the driving signal, that is, the pulsed electrical carrier (716).

The second split signal (701"), which acts as local oscillator, is fed to a polarization control (113), which produces a first input (712) of a balanced detector (114). The second output of the balanced detector is the received signal (705) comprising the backscattered Rayleigh light (402). The balanced detector (114) comprises an optical coupling mechanism, such an optical coupler (which is polarization dependent) or an optical 90° hybrid (which is polarization independent). The polarization control (113) is only used if the balanced detector (114) does not include the 90° hybrid. In that case, the polarization of the local oscillator is rotated between two orthogonal polarization states alternatively so that the polarization of the local oscillator is orthogonal for each adjacent pulse of the backscattered Rayleigh light (402).

Note that in particular embodiment, the local oscillator of the master device (100) may be distributed to regeneration modules (200) through auxiliary optic fiber links. Master devices (100) may therefore include additional splitters, output ports and/or amplification or signal conditioning means for this local oscillator distribution.

The differential signal (713) measured by the balanced detector (114) is injected into a quadrature demodulator (115), which decomposes said differential signal into phase and quadrature components (714), which are then digitalized at the analog to digital converter (107). As the first input signal (712) and the second input signal (705) have different optical carriers due to the frequency shift induced on the light pulses (401) by the acousto-optic modulator (102), the differential signal (713) produced by the balanced detector (114) contains an electrical carrier at the frequency of the frequency shift. To obtain the baseband signal present in differential signal (713), the quadrature demodulator (115) mixes said differential signal (713) with a radio frequency clock (715) of the carrier frequency provided by the driver (116).

Figure 10 presents a second embodiment of the master device (100) of the invention comprising one input/output port (120), one input port (130) and coherent detection. This can be applied, for example, to the second, third and fourth embodiments of the system of the invention (redundant open-loop architecture or non-redundant closed-loop architectures). This fourth embodiment is a straightforward combination of the elements described for the third embodiment of the master device (100), with the addition of the isolator (110) and the second photodetector (111), already described for the the second embodiment of the master device (100).

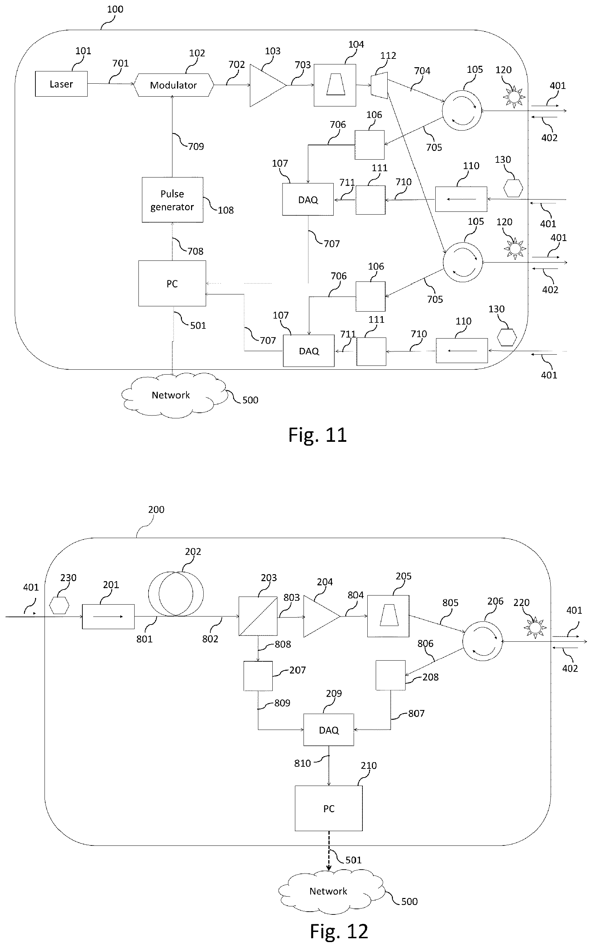

Finally, figure 11 presents a third embodiment of the master device (100) of the invention comprising two input/output ports (120) and two input ports (130). This can be applied, for example, to the fifth embodiment of the system of the invention (redundant closed-loop architecture). Master device (100) operation is similar to the first embodiment of the master device (100), with the difference that the detection scheme is replicated for both input/output ports (120), and that the filtered signal (704) is split by a splitter (112) into two circulators (105) and routed to the two input/output ports (120) to be transmitted into two separate fibers (400). Said two separate fibers (400) may be part of two counter-propagating rings of a redundant closed-loop architecture, or merely two co-propagating branches of a branched layout. Note that particular embodiments may combine elements of the duplicated schemes, such as a single analog to digital converter (107) for all detectors.

Figure 12 schematically depicts the components of the regeneration module (200) of an example, not forming part of the invention, which implements the steps of an example, not forming part of the invention. In order to maintain a univocal nomenclature, while preserving text clarity, any mention to a component, signal or port from this moment till otherwise noted refers to the instance of that component, signal or port comprised within the regeneration module (200). That is, for example, any mention to an optical amplifier refers to the regeneration module optical amplifier (204) and not to the master device optical amplifier (103) until otherwise noted.

The example of the regeneration module (200) comprises a single input port (230) and a single input/output port (220). This can be applied, for example, to the examples of the system of the invention (non-redundant open-loop and closed-loop architectures), and to the final node of another example. Received light pulses (401), deteriorated after fiber propagation due to attenuation and dispersion, are no longer apt for distributed vibration sensing. Said received light pulses are passed through an optical isolator (201). The received signal (801) comprising the deteriorated light pulses (401) is then injected into a dispersion-compensating fiber (202) which compensates the aforemention dispersion suffered by the light pulses (401) in the previous optical fiber (400) segment. The resulting dispersion-compensated signal is then split by a first coupler (203). The first split signal (803) is amplified by a first optical amplifier (204), and the resulting amplified signal is filtered by an optical filter (205). The filtered signal (805), now comprising conditioned light pulses (401) is then routed by a circulator (206) into the input/output port (220), presenting the required shape and power to implement DVS techniques in the next optical fiber (400) segment. In an alternative implementation, the first optical amplifier (204) can be placed before the first optical coupler (203), in case a higher optical power is needed at the first photodetector (207).

The second split signal (808) is detected at a first photodetector (207) generating a first electrical signal (809). On the other hand, the backscattered signal (806) comprising the received backscattered Rayleigh light (402), is detected at a second photodetector (208) generating a second electrical signal (807). Both the first electrical signal (807) and the second electrical signal (807) are digitalized at an analog to digital converter (209), such as a data acquisition card. The first electrical signal (809) can be used as a trigger for the digitalization of the second electrical signal (807). For this purpose, additional electrical amplifiers, rectifiers and/or optical delay lines may be included. Then, the digitalized signals (810) are processed by processing means (210) and transmitted to the server (600) through the network (500). Note that the processing means (210) may comprises computer program code means adapted to run on a computer, a digital signal processor, a field-programmable gate array, an application-specific integrated circuit, a micro-processor, a micro-controller, or any other form of programmable hardware. Also note that, depending on the particular embodiment, the processed information may be sent continuously, periodically or just in case of particular events, and may comprise full measured traces, already-computed distributed vibration information, or information related to particular events or alarms.

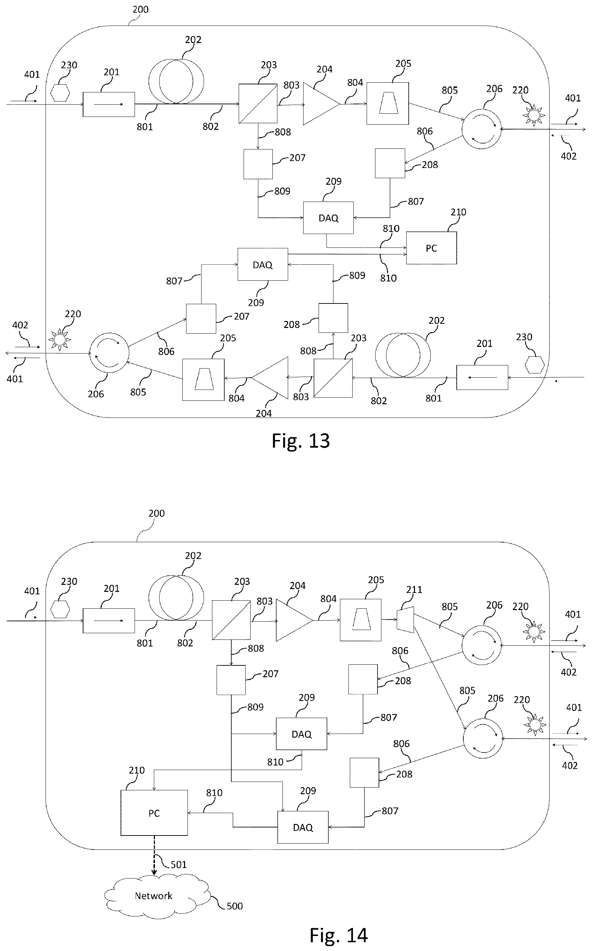

Figure 13 presents a second embodiment of the regeneration module (200) of the invention, which comprises two input ports (230) and two input/output ports (220). This can be applied, for example, to the third and fourth embodiments of the system of the invention (redundant open-loop and closed-loop architectures). The operation of the device is similar to that of the first embodiment of the regeneration module, merely replicating the regeneration and detection schemes for both directions. Note that particular embodiments may combine elements of the duplicated schemes, such as a single analog to digital converter (209) for all detectors.

Figure 14 presents the regeneration module (200) of an example, not forming part of the invention, which comprises one input port (230) and two input/output ports (220). This can be applied, for example, to an example of the system (branched architectures). The operation of the device is similar to that of the first embodiment of the regeneration module, but the detection scheme is replicated for both input/output ports (220), and the filtered signal (805) is split by a second splitter (211) into two circulators (206) and routed to the two input/output ports (220) to be transmitted into two separate fibers (400).

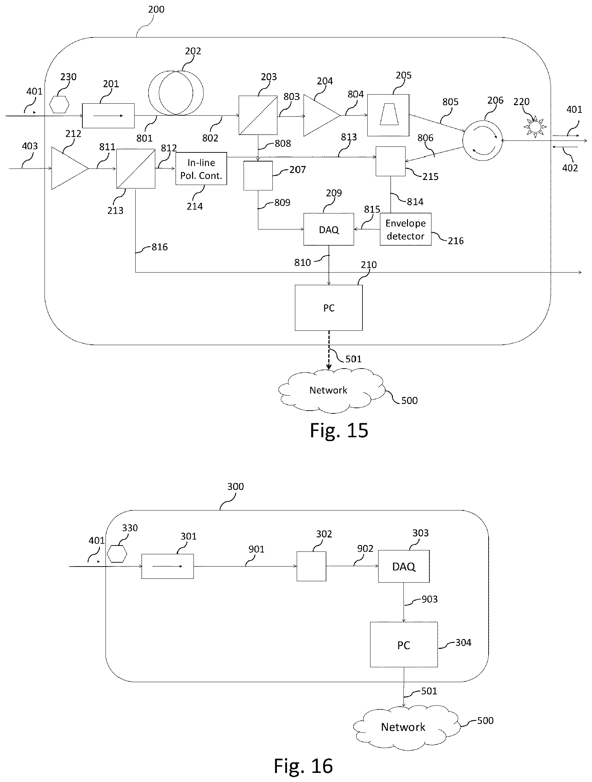

Figure 15 presents an example, not forming part of the invention, of the regeneration module (200) in which the local oscillator of the master device is transmitted to the regeneration module (200) as a master oscillator signal (403), enabling coherent detection at the regeneration module (200). Coherent detection improves sensing sensibility, typically in a 10 dB factor, which in a typical embodiment, enables to increase the measurement distance of the regeneration module (200) in tens of kilometers.

The master oscillator signal (403) is received typically through an auxiliary fiber and additional input port. The master oscillator signal (403) is amplified at a second optical amplifier (212) and the amplified master oscillator signal (811) is split by a second coupler (213). A first split master oscillator signal (816) is transmitted to the next regeneration module (200). A second split master oscillator signal (812) is fed to an in-line polarization controller (214, noted as 'In-line Pol. Cont. in the figure). The resulting polarization controlled oscillator signal (813) is used at a balanced detector (215) to detect the backscattered signal (806). The detected signal (814) goes through an envelope detector (216). Finally, the envelope detector output signal (815) is digitalized at the analog-to-digital converter (209) and transmitted to the central server (500).

Note that in the regeneration module (200), coherent detection is not performed through a quadrature demodulator, in order to circumvent the need of distributing the master device radio frequency clock for reducing signal frequency to base band. Instead, the envelope detector (216) acts as low-pass filter, removing the signal tone. Also note that the polarization of the master oscillator signal (403) is altered by its propagation through the optical fiber. Therefore, instead of classical polarization control, the in-line polarization controller (214) is used. In-line polarization controllers (214), which are already known in the state of the art, enable obtaining a desired output polarization by tracking an arbitrary input polarization, as long as polarization changes in the input polarization are relatively slow (as is the case of this scenario). Finally, note that local oscillator distribution may be used in conjunction with any other feature disclosed for other embodiments of the regeneration module of the invention.

Figure 16 schematically depicts the components of the termination module (300) of an example, not forming part of the invention. In order to maintain a univocal nomenclature, while preserving text clarity, any mention to a component, signal or port from this moment till otherwise noted refers to the instance of that component, signal or port comprised within the termination module (300). That is, for example, any mention to an isolator refers to the termination module isolator (301) and not to the regeneration module isolator (201) until otherwise noted.

The termination module (300) comprises an isolator (301) connected to a single input port (330) that prevents any back-reflection into the fiber that may interfere with the vibration measurement. The resulting signal (901) after the isolator (301) is detected at a photodetector (302) generating an electrical signal (902) that is digitalized at a digital to analog converter (303), processed by processing means (304) and transmitted to the server (600). Notice that information extracted from the light pulses (401) received at the input port (330) is used for diagnostics, such as verifying if light pulses (401) are arriving correctly at the previous module, that there are no unexpected power losses, etc. The measurement and application of diagnostics signals is therefore an optional feature that may vary in different embodiments.

## Claims

1. Module (200) of distributed vibration sensing based on backscattered Rayleigh light (402) generated by light pulses (401), **characterized in that** the module (200) comprises:
- regeneration means adapted to
receive light pulses (401) from a first optical fiber (400) segment, condition the light pulses (401) and transmit the light pulses (401) into a second optical fiber (400) segment,
and further adapted to
receive light pulses (401) from a third optical fiber (400) redundancy segment parallel to the second optical fiber (400) segment, condition the light pulses (401) and transmit the light pulses (401) into a fourth optical fiber (400) redundancy segment parallel to the first optical fiber (400) segment;
- detection means adapted to detect the received backscattered Rayleigh light (402) generated at the second optical fiber (400) segment and the fourth optical fiber (400) redundancy segment;
- connection means adapted to send sensing information based on the detected backscattered Rayleigh light (402) to a remote server (600) overviewing multiple optical fiber (400) segments.

2. Module (200) according to claim 1 **characterized in that** the regeneration means comprise a dispersion-compensating optical fiber (202).

3. Module (200) according to any of the previous claims **characterized in that** the regeneration means comprise an optical filter (205).

4. Module (200) according to any of the previous claims **characterized in that** the regeneration means comprise at least one optical amplifier (204).

5. Module (200) according to any of the previous claims **characterized in that** the module (200) further comprises an optical isolator (201) at an input where the light pulses (401) are received from the first optical fiber (400) segment.

6. Module (200) according to any of the previous claims **characterized in that** the module (200) further comprises an analog-to-digital converter (209) which digitalizes the backscattered Rayleigh light (402) received from the second optical fiber (400) segment using as trigger the light pulses (401) received from the first optical fiber (400) segment.

7. Module (200) according to any of the previous claims **characterized in that** the regeneration means further comprise a splitter (211) adapted to transmit a same conditioned light pulse (401) into at least two input/output ports (220).

8. Module (200) according to any of the previous claims **characterized in that** the detection means are coherent detection means configured to receive, amplify and redistribute a master oscillator signal (403) received from a master device which also generates the light pulses (401).

9. System of distributed vibration sensing based on Rayleigh scattered light (402) generated by light pulses (401), comprising:
- a master device (100) adapted to generate the light pulses (401) and transmit the light pulses into a first optical fiber (400) segment;
**characterized in that** the system further comprises:
- at least one regeneration module (200) according to any of the claims 1 to 8, adapted to
receive the light pulses (401) from the master device (100) through the first optical fiber (400) segment; condition the light pulses (401) and transmit the light pulses (401) into a second optical fiber (400) segment,
and further adapted to
receive light pulses (401) from the master device (100) through a third optical fiber (400) redundancy segment parallel to the second optical fiber (400) segment, condition the light pulses (401) and transmit the light pulses (401) into a fourth optical fiber (400) redundancy segment parallel to the first optical fiber (400) segment;
and
- a server (600) adapted to receive sensing information from at least the master device (100) and the at least one regeneration module (200).

10. System according to claim 9 **characterized in that** the master device (100) is connected to the at least one regeneration module (200) through the first optical fiber (400) segment in an open-loop configuration.

11. System according to claim 9 **characterized in that** the master device (100) is connected to the at least one regeneration module (200) through the first optical fiber (400) segment in a closed-loop configuration.

12. System according to any of claims 9 to 11 **characterized in that** the master device (100) comprises coherent detection means.

13. Method of distributed vibration sensing based on Rayleigh scattered light (402) generated by light pulses (401), **characterized in that** the method comprises:
- receiving light pulses (401) from a first optical fiber (400) segment, conditioning the light pulses (401) and transmitting the light pulses (401) into a second optical fiber (400) segment;
- receiving light pulses (401) from a third optical fiber (400) redundancy segment parallel to the second optical fiber (400) segment, condition the light pulses (401) and transmit the light pulses (401) into a fourth optical fiber (400) redundancy segment parallel to the first optical fiber (400) segment;
- detecting the received Rayleigh scattered light (402) generated at the second optical fiber (400) segment and the fourth optical fiber (400) redundancy segment; and
- sending sensing information based on the detected Rayleigh scattered light (402) to a remote server (600) overviewing multiple optical fiber (400) segments.

## Patentansprüche

1. Modul (200) für verteilte Schwingungserfassung basierend auf Rayleigh-Rückwärtsstreulicht (402), erzeugt von Lichtimpulsen (401), **dadurch gekennzeichnet, dass** das Modul (200):
- Regenerationsmittel, die dafür ausgelegt sind,
Lichtimpulse (401) von einem ersten Segment einer optischen Faser (400) zu empfangen, die Lichtimpulse (401) aufzubereiten und die Lichtimpulse (401) zu einem zweiten Segment einer optischen Faser (400) zu übertragen,
und ferner dafür ausgelegt sind,
Lichtimpulse (401) von einem dritten Redundanzsegment einer optischen Faser (400) parallel zu dem zweiten Segment einer optischen Faser (400) zu empfangen, die Lichtimpulse (401) aufzubereiten und die Lichtimpulse (401) zu einem vierten Redundanzsegment einer optischen Faser (400) parallel zu dem ersten Segment einer optischen Faser (400) zu übertragen;
- Erfassungsmittel, die dafür ausgelegt sind, das empfangene Rayleigh-Rückwärtsstreulicht (402), das an dem zweiten Segment einer optischen Faser (400) und dem vierten Redundanzsegment einer optischen Faser (400) erzeugt wurde, zu erfassen;
- Verbindungsmittel, die dafür ausgelegt sind, Erfassungsinformationen basierend auf dem erfassten Rayleigh-Rückwärtsstreulicht (402) an einen Fernserver (600) zu senden, der mehrere Segmente einer optischen Fasere (400) zusammenfasst,
umfasst.

2. Modul (200) nach Anspruch 1, **dadurch gekennzeichnet, dass** die Regenerationsmittel eine dispersionskompensierende optische Faser (202) umfassen.

3. Modul (200) nach einem der vorstehenden Ansprüche, **dadurch gekennzeichnet, dass** die Regenerationsmittel einen optischen Filter (205) umfassen.

4. Modul (200) nach einem der vorstehenden Ansprüche, **dadurch gekennzeichnet, dass** die Regenerationsmittel mindestens einen optischen Verstärker (204) umfassen.

5. Modul (200) nach einem der vorstehenden Ansprüche, **dadurch gekennzeichnet, dass** das Modul (200) ferner einen optischen Isolator (201) an einem Eingang, an dem die Lichtimpulse (401) von dem ersten Segment einer optischen Faser (400) empfangen werden, umfasst.

6. Modul (200) nach einem der vorstehenden Ansprüche, **dadurch gekennzeichnet, dass** das Modul (200) ferner einen Analog-Digital-Wandler (209) umfasst, der das Rayleigh-Rückwärtsstreulicht (402), das von dem zweiten Segment einer optischen Faser (400) empfangen wurde, unter Verwendung der Lichtimpulse (401), die von dem ersten Segment einer optischen Faser (400) empfangen wurden, als Auslöser digitalisiert.

7. Modul (200) nach einem der vorstehenden Ansprüche, **dadurch gekennzeichnet, dass** die Regenerationsmittel ferner einen Splitter (211) umfassen, der dafür ausgelegt ist, denselben aufbereiteten Lichtimpuls (401) zu mindestens zwei Eingangs-/Ausgangkanälen (220) zu übertragen.

8. Modul (200) nach einem der vorstehenden Ansprüche, **dadurch gekennzeichnet, dass** die Erfassungsmittel kohärente Erfassungsmittel sind, die so konfiguriert sind, dass sie ein Steueroszillatorsignal (403), das von einem Steuergerät empfangen wurde, das ebenso die Lichtimpulse (401) erzeugt, empfangen, verstärken und umverteilen.

9. System für verteilte Schwingungserfassung basierend auf von Lichtimpulsen (401) erzeugtem Rayleigh-Streulicht (402), umfassend:
- ein Steuergerät (100), das dafür ausgelegt ist, die Lichtimpulse (401) zu erzeugen und die Lichtimpulse zu einem ersten Segment einer optischen Faser (400) zu übertragen;
**dadurch gekennzeichnet, dass** das System ferner:
- mindestens ein Regenerationsmodul (200) nach einem der Ansprüche 1 bis 8 umfasst, das dafür ausgelegt ist,
die Lichtimpulse (401) von dem Steuergerät (100) durch das erste Segment einer optischen Faser (400) zu empfangen, die Lichtimpulses (401) aufzubereiten und die Lichtimpulses (401) zu einem zweiten Segment einer optischen Faser (400) zu übertragen,
und ferner dafür ausgelegt ist
Lichtimpulse (401) von dem Steuergerät (100) durch ein drittes Redundanzsegment einer optischen Faser (400) parallel zu dem zweiten Segment einer optischen Faser (400) zu empfangen, die Lichtimpulse (401) aufzubereiten und die Lichtimpulse (401) zu einem vierten Redundanzsegment einer optischen Faser (400) parallel zu dem ersten Segment einer optischen Faser (400) zu übertragen;
und
- einen Server (600), der dafür ausgelegt ist, Erfassungsinformationen zumindest von dem Steuergerät (100) und dem mindestens einen Regenerationsmodul (200) zu empfangen
umfasst.

10. System nach Anspruch 9, **dadurch gekennzeichnet, dass** das Steuergerät (100) über das erste Segment einer optischen Faser (400) in einer Konfiguration mit offenem Kreis an das mindestens eine Regenerationsmodul (200) angeschlossen ist.

11. System nach Anspruch 9, **dadurch gekennzeichnet, dass** das Steuergerät (100) über das erste Segment einer optischen Faser (400) in einer Konfiguration mit geschlossenem Kreis an das mindestens eine Regenerationsmodul (200) angeschlossen ist.

12. System nach einem der Ansprüche 9 bis 11, **dadurch gekennzeichnet, dass** das Steuergerät (100) kohärente Erfassungsmittel umfasst.

13. Verfahren für verteilte Schwingungserfassung basierend auf von Lichtimpulsen (401) erzeugtem Rayleigh-Streulicht (402), **dadurch gekennzeichnet, dass** das Verfahren:
- das Empfangen von Lichtimpulsen (401) von einem ersten Segment einer optischen Faser (400), das Aufbereiten der Lichtimpulse (401) und das Übertragen der Lichtimpulse (401) zu einem zweiten Segment einer optischen Faser (400);
- das Empfangen von Lichtimpulsen (401) von einem dritten Redundanzsegment einer optischen Faser (400) parallel zu dem zweiten Segment einer optischen Faser (400), das Aufbereiten der Lichtimpulse (401) und das Übertragen der Lichtimpulse (401) zu einem vierten Redundanzsegment einer optischen Faser (400) parallel zu dem ersten Segment einer optischen Faser (400);
- das Erfassen des empfangenen Rayleigh-Streulichts (402), das an dem zweiten Segment einer optischen Faser (400) und dem vierten Redundanzsegment einer optischen Faser (400) erzeugt wurde; und
- das Senden von Erfassungsinformationen basierend auf dem erfassten Rayleigh-Streulicht (402) an einen Fernserver (600), der mehrere Segmente einer optischen Faser (400) zusammenfasst,
umfasst.

## Revendications

1. Module (200) de détection de vibration répartie fondé sur une lumière de Rayleigh (402) rétrodiffusée générée par des impulsions de lumière (401), **caractérisé en ce que** le module (200) comprend :
- des moyens de régénération adaptés pour
recevoir des impulsions de lumière (401) en provenance d'un premier segment de fibre optique (400), conditionner les impulsions de lumière (401) et transmettre les impulsions de lumière (401) dans un deuxième segment de fibre optique (400),
et adaptés en outre pour
recevoir des impulsions de lumière (401) en provenance d'un troisième segment de redondance de fibre optique (400) parallèle au deuxième segment de fibre optique (400), conditionner les impulsions de lumière (401) et transmettre les impulsions de lumière (401) dans un quatrième segment de redondance de fibre optique (400) parallèle au premier segment de fibre optique (400) ;
- des moyens de détection adaptés pour détecter la lumière de Rayleigh (402) rétrodiffusée reçue générée au niveau du deuxième segment de fibre optique (400) et du quatrième segment de redondance de fibre optique (400) ;
- des moyens de connexion adaptés pour envoyer des informations de détection fondées sur la lumière de Rayleigh (402) rétrodiffusée détectée à un serveur distant (600) recouvrant de multiples segments de fibre optique (400).

2. Module (200) selon la revendication 1 **caractérisé en ce que** les moyens de régénération comprennent une fibre optique à compensation de dispersion (202).

3. Module (200) selon l'une quelconque des revendications précédentes **caractérisé en ce que** les moyens de régénération comprennent un filtre optique (205).

4. Module (200) selon l'une quelconque des revendications précédentes **caractérisé en ce que** les moyens de régénération comprennent au moins un amplificateur optique (204).

5. Module (200) selon l'une quelconque des revendications précédentes **caractérisé en ce que** le module (200) comprend en outre un isolateur optique (201) au niveau d'une entrée où les impulsions de lumière (401) sont reçues en provenance du premier segment de fibre optique (400).

6. Module (200) selon l'une quelconque des revendications précédentes **caractérisé en ce que** le module (200) comprend en outre un convertisseur analogique-numérique (209) qui numérise la lumière de Rayleigh (402) rétrodiffusée reçue en provenance du deuxième segment de fibre optique (400) en utilisant comme déclencheur les impulsions de lumière (401) reçues en provenance du premier segment de fibre optique (400) .

7. Module (200) selon l'une quelconque des revendications précédentes **caractérisé en ce que** les moyens de régénération comprennent en outre un diviseur (211) adapté pour transmettre une même impulsion de lumière conditionnée (401) dans au moins deux ports d'entrée/sortie (220).

8. Module (200) selon l'une quelconque des revendications précédentes **caractérisé en ce que** les moyens de détection sont des moyens de détection cohérente configurés pour recevoir, amplifier et redistribuer un signal d'oscillateur maître (403) reçu en provenance d'un dispositif maître qui génère également les impulsions de lumière (401).

9. Système de détection de vibration répartie fondé sur une lumière de Rayleigh (402) diffusée générée par des impulsions de lumière (401), comprenant :
- un dispositif maître (100) adapté pour générer les impulsions de lumière (401) et transmettre les impulsions de lumière dans un premier segment de fibre optique (400) ;
**caractérisé en ce que** le système comprend en outre :
- au moins un module de régénération (200) selon l'une quelconque des revendications 1 à 8, adapté pour
recevoir les impulsions de lumière (401) en provenance du dispositif maître (100) par l'intermédiaire du premier segment de fibre optique (400) ; conditionner les impulsions de lumière (401) et transmettre les impulsions de lumière (401) dans un deuxième segment de fibre optique (400),
et adapté en outre pour
recevoir des impulsions de lumière (401) en provenance du dispositif maître (100) par l'intermédiaire d'un troisième segment de redondance de fibre optique (400) parallèle au deuxième segment de fibre optique (400), conditionner les impulsions de lumière (401) et transmettre les impulsions de lumière (401) dans un quatrième segment de redondance de fibre optique (400) parallèle au premier segment de fibre optique (400) ;
et
- serveur (600) adapté pour recevoir des informations de détection en provenance au moins du dispositif maître (100) et de l'au moins un module de régénération (200).

10. Système selon la revendication 9 **caractérisé en ce que** le dispositif maître (100) est connecté à l'au moins un module de régénération (200) par l'intermédiaire du premier segment de fibre optique (400) dans une configuration en boucle ouverte.

11. Système selon la revendication 9 **caractérisé en ce que** le dispositif maître (100) est connecté à l'au moins un module de régénération (200) par l'intermédiaire du premier segment de fibre optique (400) dans une configuration en boucle fermée.

12. Système selon l'une quelconque des revendications 9 à 11 **caractérisé en ce que** le dispositif maître (100) comprend des moyens de détection cohérente.

13. Méthode de détection de vibration répartie fondée sur une lumière de Rayleigh (402) diffusée générée par des impulsions de lumière (401), **caractérisé en ce que** la méthode comprend :
- la réception d'impulsions de lumière (401) en provenance d'un premier segment de fibre optique (400), le conditionnement des impulsions de lumière (401) et la transmission des impulsions de lumière (401) dans un deuxième segment de fibre optique (400) ;
- la réception d'impulsions de lumière (401) en provenance d'un troisième segment de redondance de fibre optique (400) parallèle au deuxième segment de fibre optique (400), le conditionnement des impulsions de lumière (401) et la transmission des impulsions de lumière (401) dans un quatrième segment de redondance de fibre optique (400) parallèle au premier segment de fibre optique (400) ;
- la détection de la lumière de Rayleigh (402) diffusée reçue générée au niveau du deuxième segment de fibre optique (400) et du quatrième segment de redondance de fibre optique (400) ; et
- l'envoi d'informations de détection fondées sur la lumière de Rayleigh (402) diffusée détectée à un serveur distant (600) recouvrant de multiples segments de fibre optique (400).
